# EUROPEAN PATENT SPECIFICATION

(11) **EP 1 374 537 B1**
(45) Date of publication and mention of the grant of the patent: **20.01.2010**
(21) Application number: 02704951.9
(22) Date of filing: 12.03.2002
(51) Int. Cl.: H04L 29/12

(54) **TUNNELING THROUGH ACCESS NETWORKS**
TUNNELING DURCH ZUGANGSNETZWERKE
RESEAUX D'ACCES

(30) Priority: 27.03.2001 GB 0107638
(43) Date of publication of application: 02.01.2004
(73) Proprietor: Ericsson AB, Stockholm (SE)
(72) Inventor: HARDY, William Geoffrey, Coventry CV3 2BQ (GB); GRANDI, Vittoriano, 16035 Genova (IT)
(74) Representative: Stasiewski, Piotr Grzegorz
(86) International application number: PCT/GB2002/001104
(87) International publication number: WO 2002/078253

(56) References cited:
- WO-A-00/08818
- WO-A-00/79765
- SHIRO TANABE, SUSUMU MATSUI, KAZUHO MIKI, TAKAAKI HIGASHI: "IP Network Access System" HITACHI REVIEW, [Online] vol. 49, no. 4, - December 2000 (2000-12) pages 172-175, XP002216682 Retrieved from the Internet: <URL:http://global.hitachi.com/Sp/TJ-e/200 0/revdec00/pdf/r4_105.pdf> [retrieved on 2002-10-14]
- GIACOMETTI S ET AL: "TUNNELLING EFFECTIVENESS IN THE ACCESS ENVIRONMENT" 38TH EUROPEAN TELECOMUNICATIONS CONGRESS. PROCEEDINGS NETWORKING THE FUTURE. UTRECHT, NL, AUG. 24 - 28, 1999, LONDON: IBTE, GB, 24 August 1999 (1999-08-24), pages 101-105, XP000847178
- DEMIZU N ET AL: "DDT - A versatile tunneling technology" COMPUTER NETWORKS AND ISDN SYSTEMS, NORTH HOLLAND PUBLISHING. AMSTERDAM, NL, vol. 27, no. 3, 1 December 1994 (1994-12-01), pages 493-502, XP004037982 ISSN: 0169-7552

## Description

This invention relates to access networks for delivering IP services from telecommunications service providers to business and domestic customers.

Access networks are based on IP (Internet Protocol) and are a convenient way of delivering services to customers such as Video on Demand, telephony and multimedia. Such services may be delivered in a transparent manner. Each Network Terminator (NT) in the access network may be provided with a number of service points such as, for example, management, voice over IP (VoIP), video services and Internet access. Each service point may be allocated an individual IP address. However, this construction is wasteful of IPv4 addresses which are a relatively scarce resource and becoming more scarce.

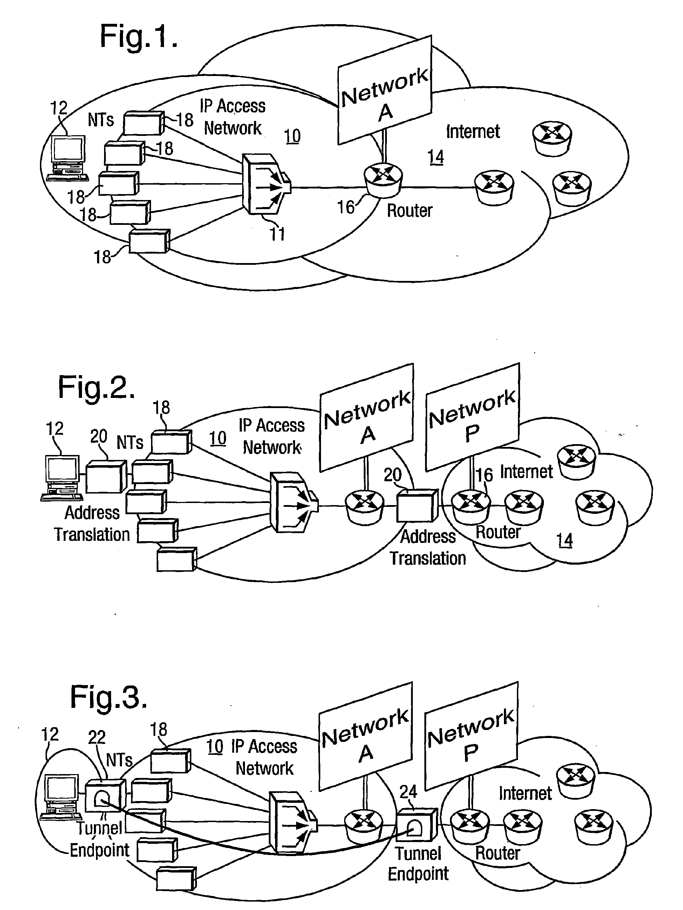

Figure 1 shows an example of an access network 10 which connects a customer/user 12 to the Internet 14 via a router 16. The IP access network includes a number of network terminators 18, each for delivering a specific service, and each having a unique public IP address. The network terminators 18 are all connected to a switch 11. In this example, the IP access network effectively forms part of the Internet. The IP addresses used within the access network 10 are all public IP addresses as are the addresses used by the end customers/users 12.

Router 16 between the access network 10 and the Internet 12 advertises its public network ID "Network A" to the rest of the Internet and all addresses within the access network 10 are defined as hosts in network A.

The arrangement described is advantageous in principle but suffers from a number of disadvantages. First, the access network operator must obtain a large IP address space from an Internet address allocation organisation. Some of these addresses will only be used for internal use within the access network while others will be used by users to connect to the Internet. This is a problem as IPv4 addresses are becoming scarce and it is undesirable to use more than the bare essential number of addresses.

The use of public addresses in the access network has potentially adverse security implications. These addresses, are, by definition, globally visible and the access network operators may need to implement complex firewalls to provide adequate security. This is clearly expensive and so undesirable.

The number of IP addresses offered to each network terminator is fixed when the network is designed. The network operator will usually want to minimise this number to conserve IP addresses. This makes it difficult for the network to provide for growth in the number of users. As a given customer adds more PCs to their network, there may come a time when the allocated IP addresses run out. This problem can be dealt with by using Network Address Port Translation but it is not ideal as it runs contrary to the concept of ubiquity of public IP addresses in the whole network. Moreover, it can create problems with some IP protocols.

There are known documents related to tunneling through public computer network, namely
- W00079765;
- SHIRO TANABE, SUSUMU MASISUI, KAZUHO MIKI, TAKAAKI HIGASHI: : "IP Network Access System" HITACHI REVIEW, vol. 49, no. 4, - December 2000 (2000-12) pages 172-175; and
- GIACOMETTI S ET AL: "TUNNELLING EFFECTIVENESS TIN THE ACCESS ENVIRONMENT" 38TH EUROPEAN TELECOMUNTCATTONS CONGRESS. PROCEEDINGS NETWORKING THE FUTURE. UTRECHT, NL, AUG. 24 - 28, 1999, LONDON: IBTE, GB, 24 August 1999 (1999-08-24), pages 101-105.

However operations as in the invention now to be described are neither disclosed nor suggested in the prior art documents.

Despite the problems mentioned above, IP access networks are, in theory, desirable as they are simple and transparent to service provision. The invention aims to overcome the problems mentioned to make access network more practical to implement.

Accordingly there is provided a method of routing data packets from a client terminal to a destination through a private access network, the access network having a network terminator, a connection with a public network having an IP address and a plurality of network elements each having a private network address. The method comprises tunnelling the data packets through the private access network via the network terminator to the connection with the public network. Tunnelling the data packets through the network comprises attaching at least one label to the data packets based on the IP address of the connection with the public network, the label including routing information through the private access network. The data packets being routed via a label switched path based on the routing information of the at least one label, wherein the connection with the public network includes a DHCP server. The method comprises sending a DHCP discover message from the network terminator via the label switched path to the connection with the public network, forwarding the DHCP discover message to the DHCP server and allocating a public IP address to the client at the DHCP server. The method further comprises mapping the allocated public IP addresses of the client to at least one label at the connection with the public network and sending a message from the DHCP server including the client IP address via the label switched path to the network terminator and inserting the port number on which the DHCP discover message is received at each stage of the label switched path into a reserved field within the message. The method also comprises generating routing labels for routing the message from the DHCP server to the network terminator from the port numbers in the reserved field.

The invention also provides a access network for delivering IP services from telecommunication service providers by routing data packets from a client terminal to a destination through a private access network, the access network comprising, a network terminator, a public network connection means having an IP address and a plurality of network elements each having a private network address, and a tunnelling means for tunnelling the data packets though the private access network via the network terminator to the public network connection means. The tunnelling means comprises means for attaching at least one label to the data packets based on the IP address of the connection with the public network, the label including routing information through the private access network, and the tunnelling means being operable to route the data packets via a label switched path based on the routing information of the at least one label. The public network connection means includes a DHCP server, said server being operable to send a DHCP discover message from the network terminator via the label switched path to the connection with the public network, forwarding the DHCP discover message to the DHCP server and allocating a public IP address to the client at the DHCP server. Mapping means are provided for mapping the allocated public IP addresses of the client to at least one label at the connection with the public network operable to send a message from the DHCP server including the client IP address via the label switched path to the network terminator. Inserting means are provided for inserting the port number on which the DHCP discover message is received at each stage of the label switched path into a reserved field within the message, and generating routing labels for routing the message from the DHCP server to the network terminator from the port numbers in the reserved field.

Embodiments of the invention have the advantage that by using tunnelling techniques to pass data packets across the access network, private addresses can be used for network elements in the access network. This enables the public IP address overhead to be reduced.

In one embodiments of the invention, the tunnel is an IP tunnel in which a private header is added to the packet to pass it through the access network.

In a further embodiment of the invention, the tunnel uses L2TP techniques with a LAC at either the client or the network terminator and an LNS at the other end of the tunnel. Data packets are passed between the LAC and LNS in PPP sessions.

In a third embodiment of the invention, the tunnel uses labels and sends the data packets along label switched paths. These labels may be MPLS labels.

Embodiments of the invention will now be described, by way of example, and with reference to the accompanying drawings, in which:
Figure 1 referred to above, is a schematic view of a prior art IP address network using public addresses throughout;
Figure 2 is a schematic view of an IP access network illustrating the principle of private addresses;
Figure 3 is a schematic view of an IP access network illustrating the principle of tunnelling and embodying the invention;
Figure 4 is a schematic view of a first embodiment of the invention;
Figure 5 shows how messages are sent from a client to a server via the IP access network in the embodiment of Figure 4;
Figure 6 shows how addresses are allocated in the embodiment of Figure 4;
Figure 7 is a schematic view of a first aspect of a second embodiment of the invention;
Figure 8 is a schematic view of a second aspect of the second embodiment of the invention;
Figure 9 is a schematic view of a third aspect of the second embodiment of the invention;
Figure 10 is a schematic view of a third embodiment of the invention and showing downstream labelling;
Figure 11 shows how labels are applied for upstream data flow;
Figure 12 shows an architecture to provide DHCP with MPLS in the embodiment of Figure 10;
Figure 13 shows automatic generation of labels in the embodiment of Figure 10;
Figure 14 shows how access MPLS tunnels and external MPLS tunnels can be integrated for upstream tunnels; and
Figure 16 shows how a single MPLS label can be allocated across a three stage network.

Referring to Figures 2 and 3, we have appreciated the desirability of using private addresses within the access network. While this does not affect traffic within the IP access network itself, the IP access network is not transparent to external users. This may be overcome by using some sort of network address translation (NAT) at the connection point between the IP access network and the Internet and at the connection point between the user and the IP access point.

Thus, in Figure 2, using the same numbering as in Figure 1, an address translator 20 is arranged between the user 12 and the IP access network 10 and also between the IP access network 10 and the Internet 14. Thus, the Internet network address of the IP Access Network, Network A is translated into a public network address p of the public network p.

Whilst this solution is adequate in theory, it remains problematic as many protocols do not pass transparently through network address translators. An application level gateway has to be added which processes all packets at the application layer to translate embedded IP addresses. Examples of such protocols include voice over IP (VoIP) protocols H.323 and SIP. The use of network address translation also prevents many common security protocols such as IP sec from being used. This is clearly unattractive to any security conscious user such as a business.

Despite the disadvantages mentioned, the solution outlined with respect to Figure 2 is attractive in that there is no overhead in the number of private addresses used in the access network. A large number of private addresses may be used and a small number of public addresses.

Figure 3 shows the principle behind the present invention. It retains the advantageous use of private addresses in the IP access network but does not use network address translation with its abundant disadvantages. Instead, the invention uses tunnelling techniques to offer end users public addresses. Thus, referring to Figure 3, tunnel end points 22, 24 are created between the user 12 and the IP access network 10 and the network 10 and the public network. All IP addresses used within the Access Network are within network A, but a user wishing to access the Internet is given an address from network P.

Thus, the user does not "see" the access network and datagrams are tunnelled trough that network. The use of tunnelling is highly advantageous as the access network operator is free to choose the range of IP address without limitation as private addresses can be duplicated without adverse consequence.

There are no adverse security implications as the access network is not directly routable from the Internet; the end user never sees the access network addresses. Furthermore, the tunnel acts as a transparent pipe, avoiding the problems highlighted with some protocols.

There are a number of tunnelling methods which are possible. The following will be considered: IP over IP; L2TP from NT with PPPoE or PPTP from user's PC to NT; L2TP from user's PC; and MPLS. It should be understood that other tunnelling techniques may be possible and are within the scope of the present invention the techniques mentioned will be considered in turn.

### IP over IP

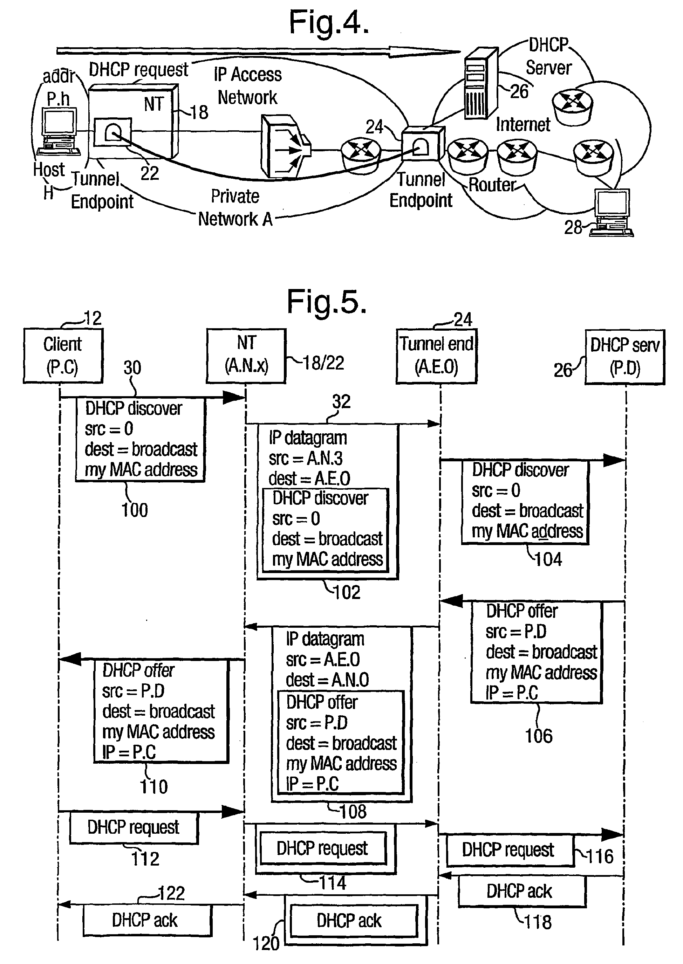

Referring to Figures 4 to 6, the tunnel stretches between the NT and an end point which includes a DHCP (Dynamic Host Control Protocol) server 26. When the host PC, user 12 boots up it requests an IP address by broadcasting a DCHP discover message to the network terminator 18. The network terminator encapsulates the message within the private IP domain and forwards it through the access network to the tunnel end point. This is done by adding a private header to the request which conceals the original source and destination from the private network.

The function of the DCHP server at the tunnel end point is to lease out public IP addresses. In practice, this may be a different server from that used by the access network to lease out private network addresses. The DHCP server intercepts the DHCP discover message and responds by offering a public address message, P.h. The response is tunnelled through the access network and arrives back at the host 14 which now knows all relevant information such as public IP address, default gateway, etc.

When the host 12 wants to send a datagram to a remote PC 28, it transmits the datagram to the network terminator 18 acting as the tunnel entrance. The network terminator encapsulates the datagram with a private IP address from network A and sends it through the access network to the tunnel endpoint. The original datagram is received and transmitted into the Internet, where it is routed to destination PC 28.

A datagram from the Internet, for example from PC 28 intended for the user PC 12 also have to pass through the tunnel. This datagram will be received at the tunnel endpoint 24 between the public Internet and the private access network 10 with the destination address P.h.

The tunnel end point looks up the address to find the internal address allocated to the user PC 12 and encapsulates the datagram within an IP packet using private addresses from network A, and transmits it to the other end of the tunnel 24, at network terminals 18. The network terminator receives the packet, strips off the encapsulation and can then deliver the original datagram to the user PC 12.

As mentioned above, the tunnel entrance between the Internet 12 and the IP access network 10 includes a DHCP server 26. The tunnel end point keeps a table of external and internal addresses and performs the look-up operation to find the relevant private address in the access network for a given public address. The DHCP server allocates the public IP addresses and the tunnel end point snoops on the actual public address allocated and adds it to its table against the private address. The operation of the DHCP server will now be described with reference to Figure 5. In that figure, message flows are indicated by arrows with broad arrows, for examples arrow 30, indicating broadcast messages, and thin arrows, for example arrow 32, indicating unicast messages. Figure 5 shows four points in the transmission path: the user 12 or client; the network terminator 18 which is also the tunnel entrance; the end of the tunnel 24; and the DHCP server.

In the following example, the first character (eg A or P) indicates the network number part of the IP address. The following alphanumeric characters stand for the host part of the IP address. (Eg P.C stands for a PC and P.D stands for the DHCP server on network P). For convenience, the host addresses of the various service points within the NT are indicated as N.x, where N is the NT number, and x is the number of the service points within it. Internal Access Network addresses are within network A, the private network, thus, the address of the tunnel ends in A.N.X. at the network terminator and A.E.∅ at the tunnel end. Public addresses are within network P, so the user PC has the allocated address PC and the DHCP server address PD.

At step 100, the user 12 issues a DHCP discover message to the local broadcast IP address. This is a broadcast message including three parameters: the source, src=0, the destination, dest=broadcast and the MAC address of the client My MAC address. The MAC address is the user's own hardware address. The Network Terminator will receive the broadcast message and will recognise it as a DHCP request message. It will recognise that it has to tunnel it through the access network. At step 102, it encapsulates the message within an IP packet having a source src=A.N.3, the identity of the terminator 18, and at destination dest=A.E.∅, the address of the end of the tunnel. The network terminator is configured with this address. This packet is sent through the private network as a unicast message.

At the end of the tunnel 24, the original DHCP discover message is received by stripping off the IP packet. The original message is then broadcast at step 104 on the local network. The DHCP server receives the message and, at step 106, allocates an external IP address to the user' s hardware address and responds with a DHCP offer message. This reply is broadcast as the user does not yet know its IP address making a unicast inappropriate. The message sent has the following parameters: source src=P.D, the destination dest=broadcast, the MAC address of client 12, My MAC address, and the public address being offered to client 12 (IP=P.C). In the example described there is a single DHCP server. Multiple servers may be used in which case replies may be received from more than one server.

The tunnel endpoint 24 now receives the message from the DHCP server and at step 108 tunnels it to the network terminator in the same manner as before, adding an IP packet to the message. However, the tunnel entrance does not know to which network terminator the message should be sent. It should be recalled that messages are unicast though the IP access network and that there will be a number of network terminators (Figure 3). This problem is overcome either by keeping a record of outstanding DHCP discover messages at the tunnel endpoint 24 and where they have come from, and using this to form the destination address for the tunnel; or adding a tagged option to the discover message at the network terminator 18 or the tunnel endpoint 24. This tag is enclosed in the DHCP offer sent out to the user and contains the internal IP address of the network terminator which is used to direct the message through the IP access network to the correct network terminator. At this point it is stripped from the message together with the internal IP packet before the DHCP offer is sent to the user at step 110.

At step 112 the user 12 receives the DHCP offer and broadcasts a DHCP request. This is tunnelled to the DHCP server in steps 114 and 116 in the same manner as described. Where there is only a single DHCP server the message could be unicast. However, where there are multiple DHCP servers a broadcast message is necessary as it acts as a refusal to other DHCP servers that may have responded to the original DHCP discover message. The purpose of the DHCP request message is to indicate acknowledgment of the acceptance of the public IP address by the client. This request will identify the address of the DHCP server which sent the IP address that has been accepted.

Finally, at steps 118, 120 and 122 the DHCP server responds with a DHCP acknowledge message which is tunnelled through the IP access network to the user in the same manner as described and which contains additional configuration data. During the above DHCP sequence, the tunnel endpoint sets up means, for example a translation table, to allow the translation of external IP addresses to internal IP addresses within the tunnel. This allows the messages from the DHCP server and data packets received from the external network to be tunnelled to the correct NT.

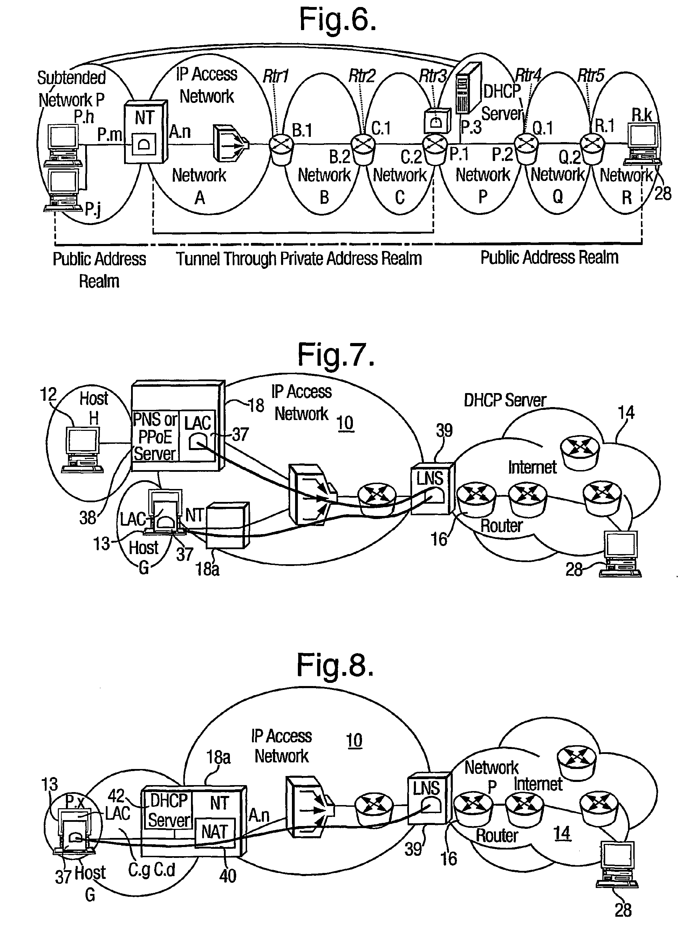

Referring now to Figure 6, the address allocation of an IP access network using IP tunnelling will now be described. The system shown includes three private address networks A, B and C. Private address network A is the IP access network 10 and networks B and C are private IP networks that may be used by the network provider to concentrate traffic from a number of IP access networks. Networks P, Q and R are public address networks. Network P is the network 12 referred to earlier and is used by the Internet Service Provider (ISP) to provide a service to clients of the access network. It is subtended to those clients at 34, on the left of the private address networks. Networks Q and R are part of the Internet.

Routers Rtr1 to Rtr5 are arranged between the various networks. Router Rtr1 advertises network A to network B, that is to Router Rtr2; Router Rtr2 advertises to network C, or router 3 that it has a route to network A. The advertising of private address stops here. Router 4 advertises network P to the rest of the Internet.

When a host computer 28 having the public address R. k on network R sends a datagram with destination P.h, that is the original user 12 of the earlier example, the datagram will be sent to its default router address R.I on router Rtr5. Rtr5 looks up network P in its routing table in standard manner and sends the datagram to the ISP's router Rtr4 on address Q.I.

Router Rtr4 will examine the datagram and discover that it has a source address equal to its own network address : P and will user ARP (Address Resolution Protocol) to find the MAC address corresponding to P.h, the public address of the destination PC.

At this point, router Rtr3, the tunnel end point router, must respond with its own MAC address. The datagram is then sent to router Rtr3.

Router 3 looks up the source address P.h in its tunnelling table to find the address of the network terminator within the access network A.n. It encapsulates the original datagram within an IP packet with destination address A.n, looks up network A in its private network routing tables and forwards the message to Rtr2 on address C1.

Router Rtr2 forwards the message to router Rtr1 which is at the head of the network. The datagram is then routed through the access network to the relevant network terminator having address A.n.

At the network terminator, the received message has the IP header stripped off to recover the original datagram. The datagram is then delivered in conventional fashion using ARP on the client network.

Upstream packets sent from the user P.h to PC R.k will now be described.

User P.h is configured with address P.M as its default gateway. This is effectively the public address of the tunnel entrance. The user PC uses ARP to find the MAC address of the network terminator and then transmits the datagram to it. All network terminators may have the same gateway address P.M.

The network terminator receives the datagram and encapsulates it within an IP datagram having destination address C.2, the private IP address of the end of the tunnel. The network terminator needs prior knowledge of this address which could be configured during the setup of the access network, or chosen, for example from a web page offered by a http server in the network terminator. Different tunnel endpoint addresses may be chosen for different IPS's although only one endpoint can be used at a time by all clients connected to an NT as it is not possible to signal session information to the NT.

The datagram is routed through the access network to the head end router Rtr1 through network B to router Rtr3, the tunnel endpoint router, on address C.2. Router Rtr3 removes the tunnel header and recovers the original datagram with destination address R5. It looks up network R in its public network routing table and routes the datagram to the required host via routers Rtr4 and Rtr5.

### Tunnelling using layer 2 Tunnelling Protocol (L2TP)

The use of layer 2 tunnelling protocol to tunnel through the access network will be described with reference to Figures 7, 8 and 9. In many respects, the manner in which messages are handled is similar to the embodiments described previously and so will not be described in a great detail.

Layer 2 tunnelling protocol has been introduced to provide efficient dial-up access to the Internet. The present embodiment adapts that usage by removing the conventional dial up element to provide access to public IP addresses from a privately addressed Access Network.

In Figure 7, there are illustrated two methods in which L2TP is used to provide Internet access. Figure 7 shows an access network 10 to which hosts 12, 13 are connected through network terminators 18. The access network is connected to the Internet 14 through a router 16 and, through a series of further routers to a further host PC 28.

L2TP was conceived to tunnel PPP (Point to Point Protocol) sessions across an IP network. Tunnelling is between a L2TP Access Concentrator (LAC) at one end and an L2TP Network Server (LNS) at the other. Both the LAC and LNS are known components and their structure need not be discussed. As the protocol works by transporting clients' PPP sessions to the LNS it allows IP addresses to be allocated remotely at the LNS and transferred to the PC. It will be appreciated that this is similar to the allocation of IP addresses by the DHCP server in the previous embodiment.

The LAC may be located in the network terminator. In Figure 7 the terminator 18 connected to host H, 12 is shown with a LAC 37. The terminator will also include a PNS (Point to Point Network Server) or a PPoE server (Point to Point over Ethernet) 38 to handle communications with the host PC.

The PPP protocol provides the capability to transport IP addresses. Host, H, 12 initiates a PPP session with the PNS in the NT using Point to Point Tunnelling Protocol (PPTP) or with the PPPoE server using Point to Point Protocol over Ethernet (PPPoE). The PNS or PPPoE server in the NT causes the LAC within the NT to initiate a L2TP session with the LNS. When the L2TP tunnel has been created, the client's PPP session is extended to the LNS using the L2TP tunnel. The only internal IP address required is the internal address of the LAC. Multiple PCs connected to the Ethernet port of the network terminator can create separate sessions over the Ethernet and receive individual IP addresses from the LNS.

In addition, a DHCP server may be provided in the network terminator 18 to provide IP addresses local to the customer's LAN. The addresses are not used by the Access Network or the Internet.

The second variant is to use the clients PC as the LAC. PC 13 in Figure 7 is shown configured as the LAC. This is possible if the PC is running the Windows 2000 Operating System from Microsoft Corp. which provides support for L2TP. Any other operating system offering such support would be appreciated.

All client PCs connected to the network terminator's Ethernet port are allocated an IP address by the access network. This enables messages to be routed between the PC based LACs and the LNS. These IP addresses may be allocated from the Access Network private address space or a network address (NAT) function may be provided in the network terminator 18a and a separate address space provided for the client LAN using a DHCP server. This latter arrangement is illustrated in Figure 8 with the NAT shown at 40 and the DHCP server at 42, both within NT 18a.

In Figure 8, there are three network addresses; network A, P and C. Network A is the private address space of the access network operator; network P is the public address of clients using the Internet; and network C is the private address within the client's own LAN.

The NAT 40 has an internal address A.n in the access network. The DHCP server 42 within the 18a allocates addresses for the client within the client network C. the NT itself has an address C.d in the client domain. Thus, the host G, 13 receives a network address C.g from the DHCP server 42. The NAT 40 translates addresses between client domain address C and access domain addresses A.

When a client uses the internal LAC to connect to the ISP, the LNS will allocate a public address from network P. this IP address is passed via L2TP to the client PC which appears to the Internet as a detached part of Network P.

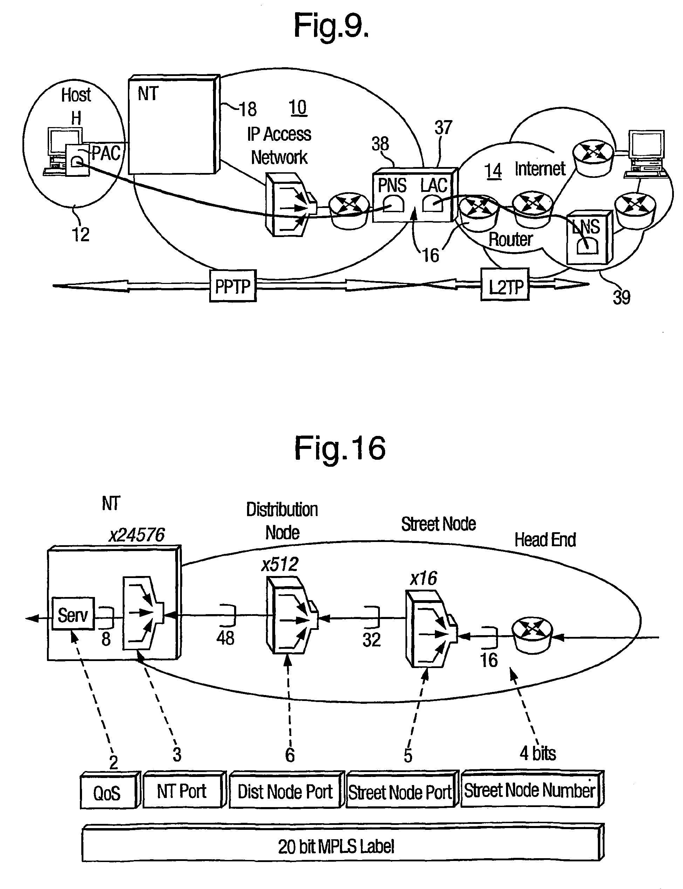

Figure 9 shows a variant of the first of the L2TP methods described in that example, the PNS server and LAC are located at the network terminator 18. In Figure 9 these two components are arranged at a central point. As can be seen in Figure 9, this point is between the access network 10 and the Internet 14, specifically before the Internet router 16.

The PPP session is then tunnelled from the user's PC to the PNS server 38 using PPTP (Point to Point Tunnelling Protocol). The tunnel is from a pont to point Concentrator (PAC) at the PC. In this case the PAC is used as the client end of the PPTP protocol. The PPP session is then extended to the user's ISP using L2TP. The user is then allocated a public IP address in the domain allocated to his chosen ISP, that is the network served by the LNS belonging to the ISP.

### Tunnelling Musing MPLS

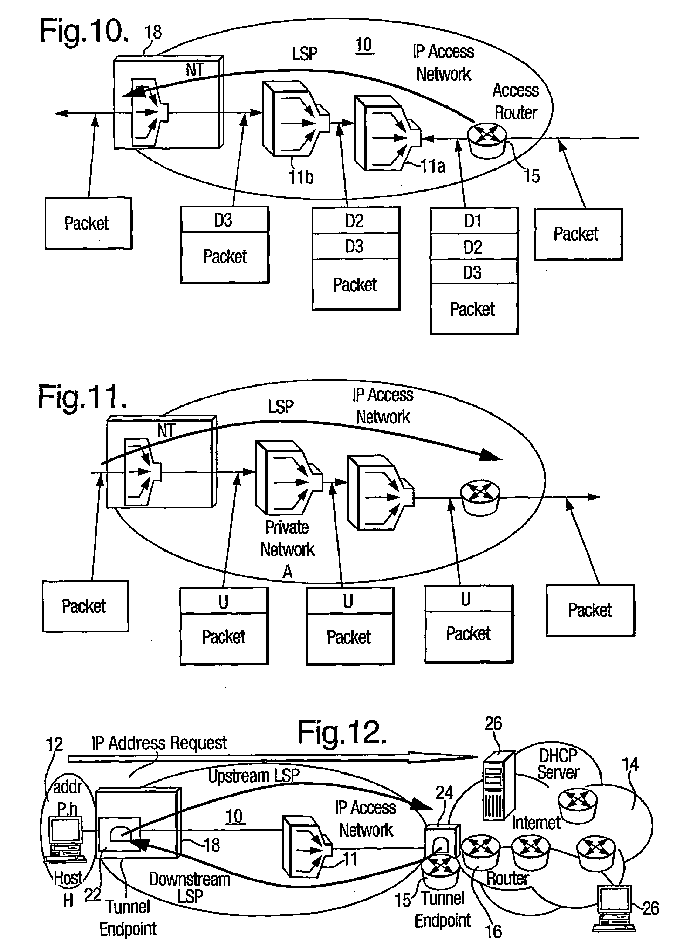

Figures 10 to 16 show a third embodiment of the invention in which MPLS (multi-protocol label switching) is used to tunnel data through the access network. Use of MPLS has a number of advantages, namely it can be used to determine the physical path through the network. Instead of using MAC or IP addresses to route packets, MPLS can be generated according to the destination of the packets. MPLS can also be used to identify the quality of service requirements of paths through the network and provide multiple paths through the access networks.

The use of MPLS will be described first by considering downstream and upstream tunnelling with reference, respectively, to Figures 10 and 11.

Figure 10 shows the access network 10 having a network terminator 18, and a pair of concentrators 11 and an access network router 15. An explicitly router ISP is used to tunnel downstream data through the network. The access router 15 keeps a map of IP addresses to MPLS labels. When a packet arrives at the access router, its IP address is examined. Three MPLS labels, D1, D2 and D3 are inserted into the packet and the packet sent to the first stage concentrator 11a. The number of labels attached will be equal to the number of stages in the network through which the packet has to pass. In this case, there are three stages; access router to concentrator 1; concentrator 1 to concentrator 2; and concentrator 2 to network terminator.

The first stage concentrator examines the label on top o the stack D1 and uses it to route the packet, removing that label, D1 from the label stack. D1 may contain the output part number on which the packet is to be transmitted. Label D1 is popped off the label stack and the packet forwarded to the second stage concentrator 11b. Here a similar operation is performed, using label D2 and, according to the destination given by label D2 the packet, now only containing the original packet and label D3 is forwarded to the network terminator. At the NT 18, a similar operation is performed again, with the NT examining the remaining label D3 and routing the bare packet to the appropriate element in the network terminator depending upon the routing information contained in label D3. This final destination is the tunnel endpoint.

The MPLS labels can also be used to provide quality of service QoS management by using a part of the label to allocate a class to the traffic which controls the queuing algorithms used on concentration points.

The embodiment has been described in terms of a label for each stage of the routing through the IP access network. The MPLS label is a standard length of 20 bits and a single label can carry routing and QoS information for more than one stage. This will be described later.

Referring now to Figure 11, upstream routing of packets is more simple as they are all destined for the same point; the access router 15. Thus, a single label only is required and is used by all the stages. The label is not popped up by any of the stages but merely examined before the packet and label is passed on to the next stage. The label is only popped at the access network router. Again, the label, shown as .U (upstream) in Figure 11 can also include QoS management, using different label values for different traffic classes.

It will be appreciated from the discussion of Figure 10 and 11 that the access network does not use IP addresses for internal routing of user packets. IP addresses are only used at the extremities of the access network where it has to communicate with external networks, for example at the access router 15 and the network terminator 18. Individual address domains may be used for each type of service offered by the NT, such as videos, voice over IP and Internet access to simplify the provision of firewall security.

Figure 12 illustrates how DHCP can be provided with MPLS tunnelling. Like components are shown with the same reference numerals as in previous examples.

The host 12 will request an IP address by generating a DHCP discover message. This arrives at the MPLS tunnel entrance 22 in the network terminator 22. The request is sent along the upstream LSP to the access router 15 in the manner described with respect to Figure 11 the access router here acts as the tunnel endpoint 24. The DHCP discover request will now be acted upon by the DHCP server 26 which will allocate a public IP address to the client and send this back to the client. To enable this, the access server 15 sets up the necessary mapping from IP address to MPLS label and sends the DHCP offer message along the downstream LSP back to the client in the manner described with respect to Figure 10.

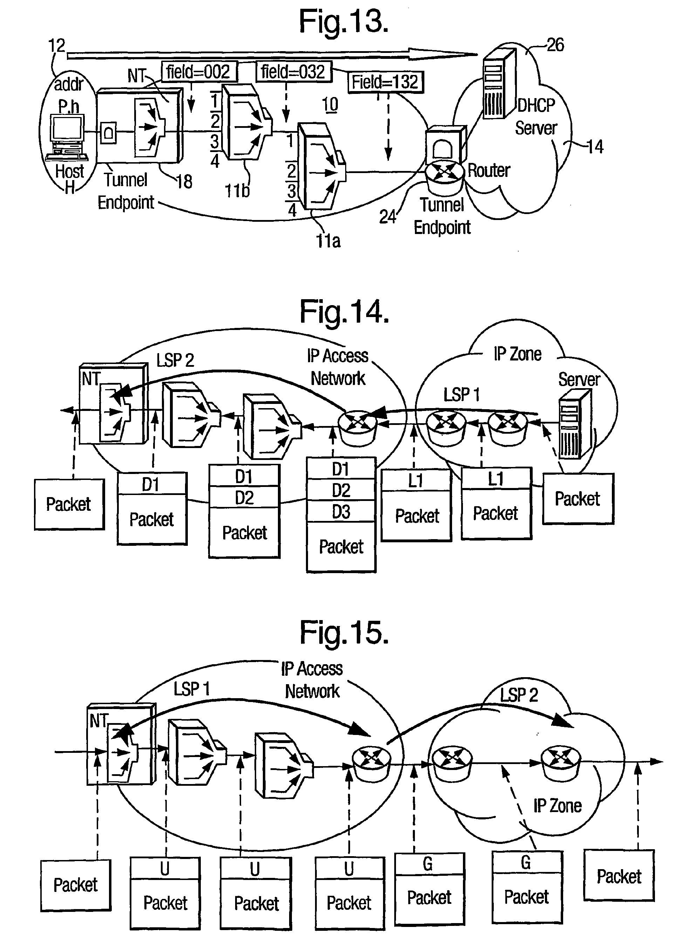

MPLS labels may be generated automatically. This will be described with reference to Figure 13. To begin with, a special MDLS label Ud is reserved for DHCP discover and request messages. The network terminator 18 detects the DCHP message as it is an IP Broadcast message.

Broadcast messages are not normally forwarded by the network terminator. The NT inserts the MPLS label Ud and inserts the port number on which the request was received into a reserved field in the DHCP message. In the Figure 13 example, this is 002 hex. The DHCP request is then forwarded on to the second concentrator stage 11b.

As each concentration stage receives the message it will recognise that the message is a DCHP request as the packet will carry the unique Ud label. The concentration inserts the port number on which the request was received into some bits of the reserved field and passes the message on. In the present example it can be seen that the message is received at port three of concentration 110 so the reserved field changes from 002 to 032. At the next concentrator the message is received at port 1 and so the reserved field changes to 132.

When the DCHP message is received at the access router, acting as the tunnel endpart, the reserved field will contain the port numbers on which the message was received at all the concentrator stages including the network terminator. The DHCP request is sent to the DHCP server 26 and, when a response is received, the reserved field, which must be echoed by the DHCP server, can be used to generate MPLS routing labels for the downstream path from the access server 15 to the network terminator 18.

One field which may be used as the reserved field is the chaddr field. If unicast DHCP renewals are used by clients, the NT also has to detect such renewals as a special case in order that the correct MPLS label can be applied.

So far, MPLS tunnels have been described purely within access networks. Access tunnels may be integrated with external MPLS tunnels as will be described with reference to Figures 14 and 15. The purpose of such integration is to enable the QoS attributes of the external tunnel to be maintained in the access network.

Figure 14 illustrates how this may be achieved for downstream messages. Here there are two separate downstream tunnels, LSP1 and LSP2. In the first tunnel, a packet is sent from server 50 to the IP access network router 15. This packet has an attached label Li which includes quality of service management information. The access router 15 terminates the tunnel LSP1 and pops the label Li extracting the QoS management information and the destination and generates labels D1 to D3, or whatever labels are required as discussed with respect to Figure 10. The QoS characteristics of tunnel LSP1 can be carried into these new labels so that the appropriate queues are used to forward the packets within the access network.

In Figure 15, upstream tunnels are easily integrated by extracting the quality of service information specified in an upstream label U in the access network at the access network router 15 and inserting it into the label of the second tunnel LSP2 to maintain continuity. Thus the label in the IP zone has the same QoS data.

It was mentioned earlier that downstream messages, which include several labels need not necessarily use a separate label for each stage. Figure 16 shows how a single 20 bit label could be allocated in a three stage access network. In Figure 16, the two concentrator stages 11a, 11b are identified as street node and distribution nodes respectively. The access router is connected to 16 street nodes, each of which are connected to 32 distribution nodes, giving a total of 512 distribution nodes. The distribution nodes are each connected to 48 NTs; a total of 24575 NTs. Each of the NTs is connected to 8 service points each of which can be provided with one of four levels of Q0S The 20 bit MPLS label is therefore made up of a 4 bit street number, a 5 bit street node port, a 6 bit distribution node port, a 3 bit NT port and a 2 bit QoS.

Trade offs may be made in the bit allocations. For example, 32 street nodes each parenting 16 distribution nodes could be supported by allocating 5 bit to the street node number and flour bits to the street node port number. At present, a two bit QoS is sufficient as only four levels of QoS are used: video, voice, LAN data and management but the above allocation allows for eight for future use. The number of service points at the NT may be reduced to four, using 3 MPLS but, and the number of QoS levels reduced to 2, using a single MPLS bit. This releases two further bits to allow, for example, 32 street nodes to support up to 64 distribution nodes each.

It will be appreciated that in each of the embodiments described, tunnelling techniques have been used to send data through an access network which uses private internal address. Each of the tunnelling techniques allows data to pass through the private address network without the need to know those private addresses. This has the advantage of making it possible to construct access networks using private internal addresses so reducing the need to use scarce public IP addresses in such networks.

Variations and modifications to the embodiments are possible and will occur to those skilled in the art. For example, other tunnelling techniques may be possible beyond those exemplified. Such modifications are within the scope of the present invention.

## Claims

1. A method of routing data packets from a client terminal (12) to a destination through a private access network, the access network having a network terminator (18), a connection with a public network having an IP address and a plurality of network elements each having a private network address, the method comprising tunnelling (100) the data packets through the private access network via the network terminator (18) to the connection with the public network, **characterised in that** tunnelling the data packets through the network comprises attaching at least one label to the data packets based on the IP address of the connection with the public network, the label including routing information through the private access network, the data packets being routed via a label switched path based on the routing information of the at least one label;
wherein the connection with the public network includes a DHCP server (26) and the method comprises sending a DHCP discover message from the network terminator (18) via the label switched path to the connection with the public network, forwarding the DHCP discover message to the DHCP server (26) and allocating (106) a public IP address to the client at the DHCP server (26); mapping the allocated public IP addresses of the client to at least one label at the connection with the public network and sending (108) a message from the DHCP server (26) including the client IP address via the label switched path to the network terminator (18);
inserting the port number on which the DHCP discover message is received at each stage of the label switched path into a reserved field within the message, and generating routing labels for routing the message from the DHCP server (26) to the network terminator (18) from the port numbers in the reserved field.

2. A method according to claim 1, comprising sending a message from the client (12) to the public IP address of the network terminator (18), encapsulating the message in a IP packet having the destination address of the connection with a public network and sending the message from the network terminator (18) to the destination address.

3. A method according to claim 2, the method comprising removing the IP packet from the message received at the connection with a public network, sending the message to the DHCP server (26), sending a return message including a client identifier from the server to the connection with a network, encapsulating the return message in an IP packet having the destination address of the network terminator (18), sending the return message to the network terminator (18), removing the IP packet from the return message at the network terminator (18) and sending the message from the network terminator (18) to the client (12).

4. A method according to claim 3, wherein the connection with the external network maintains a record of outstanding DHCP discover messages received and their source address in order to route the reply message to the correct network terminator (18).

5. A method according to claim 3, wherein the DHCP discover message is tagged with the private address of the network terminator (18) and the tag is stripped before the DHCP discover message is sent to the DHCP server (26).

6. A method according to any above claim, wherein the or each label is an MPLS label.

7. A method according to any above claim, wherein a label is attached for each point in the network through which the data packets pass.

8. A method according to any above claim, wherein the or each label includes quality of service information.

9. A method according to any above claim, wherein the network terminator (18) removes the at least one label and forwards the message from the DHCP server (26) to the client (12).

10. A method according to any above claim further comprising tunnelling data packets from a second network point on the public network using a label switched path, and, at the connection with the public network, removing a label attached to the data packets received from the second destination point and extracting the ultimate IP destination address therefrom, and generating a fresh set of labels to enable the data to be sent to the network terminator (18) via a further label switched path.

11. An access network for delivering IP services from telecommunication service providers by routing data packets from a client terminal (12) to a destination through a private access network, the access network comprising, a network terminator (18), a public network connection means having an IP address and a plurality of network elements each having a private network address, and a tunnelling means for tunnelling the data packets though the private access network via the network terminator to the public network connection means,
**Characterised in that**
(a) the tunnelling means comprises means for attaching at least one label to the data packets based on the IP address of the connection with the public network, the label including routing information through the private access network, and the tunnelling means being operable to route the data packets via a label switched path based on the routing information of the at least one label;
(b) the public network connection means includes a DHCP server (26), said server being operable to send a DHCP discover message from the network terminator (18) via the label switched path to the connection with the public network, forwarding the DHCP discover message to the DHCP server (26) and allocating a public IP address to the client at the DHCP server (26),
(c) mapping means are provided for mapping the allocated public IP addresses of the client to at least one label at the connection with the public network operable to send a message from the DHCP server (26) including the client IP address via the label switched path to the network terminator (18), and,
(d) inserting means are provided for inserting the port number on which the DHCP discover message is received at each stage of the label switched path into a reserved field within the message, and generating routing labels for routing the message from the DHCP server (26) to the network terminator from the port numbers in the reserved field.

## Patentansprüche

1. Verfahren zum Leiten von Datenpaketen von einem Client-Endgerät (12) durch ein privates Zugangsnetz zu einem Ziel, wobei das Zugangsnetz eine Netzabschlusseinrichtung (18), eine Verbindung mit einem öffentlichen Netz mit einer IP-Adresse und eine Mehrzahl von Netzelementen jeweils mit einer privaten Netzadresse aufweist, wobei das Verfahren ein Tunneln (100) der Datenpakete durch das private Zugangsnetz über die Netzabschlusseinrichtung (18) zur Verbindung mit dem öffentlichen Netz umfasst, **dadurch gekennzeichnet, dass** das Tunneln der Datenpakete durch das Netz ein Anhängen wenigstens eines Etiketts an die Datenpakete basierend auf der IP-Adresse der Verbindung mit dem öffentlichen Netz umfasst, wobei das Etikett Leitweginformationen durch das private Zugangsnetz enthält, und die Datenpakete basierend auf den Leitweginformationen des wenigstens einen Etiketts über einen etikettvermittelten Pfad geleitet werden;
wobei die Verbindung mit dem öffentlichen Netz einen DHCP-Server (26) umfasst, und das Verfahren umfasst: Senden einer DHCP-Erkennungsnachricht von der Netzabschlusseinrichtung (18) über den etikettvermittelten Pfad zur Verbindung mit dem öffentlichen Netz, Weiterleiten der DHCP-Erkennungsnachricht zum DHCP-Server (26) und Zuordnen (106) einer öffentlichen IP-Adresse zum Client am DHCP-Server (26);
Abbilden der zugeordneten öffentlichen IP-Adressen des Clients auf wenigstens ein Etikett an der Verbindung mit dem öffentlichen Netz und Senden (108) einer Nachricht vom DHCP-Server (26), welche die Client-IP-Adresse enthält, über den etikettvermittelten Pfad an die Netzabschlusseinrichtung (18);
Einfügen der Anschlussnummer, bei welcher die DHCP-Erkennungsnachricht auf jeder Stufe des etikettvermittelten Pfads empfangen wird, in ein reserviertes Feld innerhalb der Nachricht, und Erzeugen von Leitweglenkungsetiketten zum Leiten der Nachricht vom DHCP-Server (26) zur Netzabschlusseinrichtung (18) aus den Anschlussnummern im reservierten Feld.

2. Verfahren nach Anspruch 1, umfassend ein Senden einer Nachricht vom Client (12) an die öffentliche IP-Adresse der Netzabschlusseinrichtung (18), Einkapseln der Nachricht in einem IP-Paket mit der Zieladresse der Verbindung mit einem öffentlichen Netz, und Senden der Nachricht von der Netzabschlusseinrichtung (18) an die Zieladresse.

3. Verfahren nach Anspruch 2, wobei das Verfahren umfasst: Entfernen des IP-Pakets aus der Nachricht, die an der Verbindung mit einem öffentlichen Netz empfangen wird, Senden der Nachricht an den DHCP-Server (26), Senden einer Rücknachricht, die eine Client-Kennung enthält, vom Server zur Verbindung mit einem Netz, Einkapseln der Rücknachricht in einem IP-Paket mit der Zieladresse der Netzabschlusseinrichtung (18), Senden der Rücknachricht an die Netzabschlusseinrichtung (18), Entfernen des IP-Pakets aus der Rücknachricht an der Netzabschlusseinrichtung (18), und Senden der Nachricht von der Netzabschlusseinrichtung (18) an den Client (12).

4. Verfahren nach Anspruch 3, wobei die Verbindung mit dem externen Netz eine Aufzeichnung von empfangenen unerledigten DHCP-Erkennungsnachrichten und ihrer Quelladressen führt, um die Antwortnachricht zur korrekten Netzabschlusseinrichtung (18) zu leiten.

5. Verfahren nach Anspruch 3, wobei die DHCP-Erkennungsnachricht mit der privaten Adresse der Netzabschlusseinrichtung (18) getaggt wird, und das Tag eliminiert wird, bevor die DHCP-Nachricht an den DHCP-Server (26) gesendet wird.

6. Verfahren nach einem der vorhergehenden Ansprüche,
wobei das oder jedes Etikett ein MPLS-Etikett ist.

7. Verfahren nach einem der vorhergehenden Ansprüche,
wobei für jeden Punkt im Netz, welchen die Datenpakete passieren, ein Etikett angehängt wird.

8. Verfahren nach einem der vorhergehenden Ansprüche,
wobei das oder jedes Etikett Dienstgüteinformationen enthält.

9. Verfahren nach einem der vorhergehenden Ansprüche,
wobei die Netzabschlusseinrichtung (18) das wenigstens eine Etikett entfernt und die Nachricht vom DHCP-Server (26) zum Client (12) weiterleitet.

10. Verfahren nach einem der vorhergehenden Ansprüche, ferner umfassend ein Tunneln von Datenpaketen von einem zweiten Netzpunkt im öffentlichen Netz unter Verwendung eines etikettvermittelten Pfads und Entfernen bei der Verbindung mit dem öffentlichen Netz eines Etiketts, das an die Datenpakete angehängt ist, die vom zweiten Zielpunkt empfangen werden, und Extrahieren der IP-Endzieladresse daraus und Erzeugen eines neuen Satzes von Etiketten, um zu ermöglichen, dass die Daten über einen weiteren etikettvermittelten Pfad an die Netzabschlusseinrichtung (18) gesendet werden.

11. Zugangsnetz zum Zustellen von IP-Diensten von Telekommunikationsdiensteanbietern durch Leiten von Datenpaketen von einem Client-Endgerät (12) durch ein privates Zugangsnetz zu einem Ziel, wobei das Zugangsnetz umfasst: eine Netzabschlusseinrichtung (18), ein öffentliches Netzverbindungsmittel mit einer IP-Adresse und eine Mehrzahl von Netzelementen jeweils mit einer privaten Netzadresse, und ein Tunnelmittel zum Tunneln der Datenpakete durch das private Zugangsnetz über die Netzabschlusseinrichtung zum öffentlichen Netzverbindungsmittel,
**dadurch gekennzeichnet, dass:**
(a) das Tunnelmittel Mittel zum Anhängen wenigstens eines Etiketts an die Datenpakete basierend auf der IP-Adresse der Verbindung mit dem öffentlichen Netz umfasst, wobei das Etikett Leitweginformationen durch das private Zugangsnetz enthält, und das Tunnelmittel so betrieben werden kann, dass es die Datenpakte über einen etikettvermittelten Pfad basierend auf den Leitweginformationen des wenigstens einen Etiketts leitet;
(b) das öffentliche Netzverbindungsmittel einen DHCP-Server (26) umfasst, wobei der Server so betrieben werden kann, dass er eine DHCP-Erkennungsnachricht von der Netzabschlusseinrichtung (18) über den etikettvermittelten Pfad zur Verbindung mit dem öffentlichen Netz sendet, wobei die DHCP-Erkennungsnachricht zum DHCP-Server (26) weitergeleitet und dem Client am DHCP-Server (26) eine öffentliche IP-Adresse zugeordnet wird,
(c) Abbildungsmittel vorgesehen sind zum Abbilden der zugeordneten öffentlichen IP-Adressen des Clients auf wenigstens ein Etikett an der Verbindung mit dem öffentlichen Netz, betreibbar, um eine Nachricht vom DHCP-Server (26), welche die Client-IP-Adresse enthält, über den etikettvermittelten Pfad an die Netzabschlusseinrichtung (18) zu senden, und
(d) Einfügemittel vorgesehen sind zum Einfügen der Anschlussnummer, bei welcher die DHCP-Erkennungsnachricht auf jeder Stufe des etikettvermittelten Pfads empfangen wird, in ein reserviertes Feld innerhalb der Nachricht und Erzeugen von Leitweglenkungsetiketten zum Leiten der Nachricht vom DHCP-Server (26) zur Netzabschlusseinrichtung aus den Anschlussnummern im reservierten Feld.

## Revendications

1. Procédé de routage de paquets de données depuis un terminal client (12) vers une destination à travers un réseau d'accès privé, le réseau d'accès comportant un terminateur de réseau (18), une connexion avec un réseau public ayant une adresse IP et une pluralité d'éléments de réseau ayant chacun une adresse de réseau privé, le procédé comprenant la tunnelisation (100) des paquets de données à travers le réseau d'accès privé via le terminateur de réseau (15) vers la connexion avec le réseau public, **caractérisé en ce que** la tunnelisation des paquets de données à travers le réseau comprend d'attacher au moins une étiquette aux paquets de données sur la base de l'adresse IP de la connexion avec le réseau public, l'étiquette incluant l'information de routage à travers le réseau d'accès privé, les paquets de données étant routés via un conduit commuté par étiquette sur la base de l'information de routage d'au moins une étiquette ;
dans lequel la connexion avec le réseau public inclut un serveur DHCP (26) et le procédé comprend d'envoyer un message de découverte DHCP depuis le terminateur de réseau (18) via le conduit commuté par étiquette vers la connexion avec le réseau public, d'acheminer le message de découverte DHCP vers le serveur DHCP (26) et d'allouer (106) une adresse IP publique au client au niveau du serveur DHCP (26) ;
mettre en correspondance les adresses IP publiques allouées au client avec au moins une étiquette de la connexion avec le réseau public et d'envoyer (108) un message depuis le serveur DHCP (26) incluant l'adresse IP du client via le conduit commuté par étiquette vers le terminateur de réseau (18) ;
insérer le numéro de port sur lequel le message de découverte DHCP est reçu à chaque étape du conduit commuté par étiquette dans un champ réservé à l'intérieur du message, et générer des étiquettes de routage pour router le message depuis le serveur DHCP (26) vers le terminateur de réseau (18) d'après les numéros de port dans le champ réservé.

2. Procédé selon la revendication 1, comprenant d'envoyer un message depuis le client (12) vers l'adresse IP publique du terminateur de réseau (18), d'encapsuler le message dans un paquet IP ayant l'adresse de destination de la connexion avec un réseau public et d'envoyer le message depuis le terminateur de réseau (18) vers l'adresse de destination.

3. Procédé selon la revendication 2, le procédé comprenant de supprimer le paquet IP du message reçu au niveau de la connexion avec un réseau public, d'envoyer le message au serveur DHCP (26), d'envoyer un message de retour incluant un identifiant de client depuis le serveur vers la connexion avec un réseau, d'encapsuler le message de retour dans un paquet IP ayant l'adresse de destination du terminateur de réseau (18), d'envoyer le message de retour au terminateur de réseau (18), de supprimer le paquet IP du message de retour au niveau du terminateur de réseau (18) et d'envoyer le message depuis le terminateur de réseau (18) vers le client (12).

4. Procédé selon la revendication 3, dans lequel la connexion avec le réseau externe conserve un enregistrement des messages de découverte DHCP en suspens reçus et leur adresse source afin de router le message de réponse vers le terminateur de réseau correct (18).

5. Procédé selon la revendication 3, dans lequel le message de découverte DHCP est balisé avec l'adresse privée du terminateur de réseau (18) et la balise est retirée avant que le message de découverte DHCP soit envoyé au serveur DHCP (26).

6. Procédé selon une quelconque des revendications précédentes, dans lequel la ou chaque étiquette est une étiquette MPLS.

7. Procédé selon une quelconque des revendications ci-dessus, dans lequel une étiquette est attachée à chaque point dans le réseau à travers lequel les paquets de données passent.

8. Procédé selon une quelconque des revendications ci-dessus, dans lequel la ou chaque étiquette inclut une information de qualité de service.

9. Procédé selon une quelconque des revendications ci-dessus, dans lequel le terminateur de réseau (18) supprime au moins une étiquette et achemine le message depuis le serveur DHCP (26) vers le client (12).

10. Procédé selon une quelconque des revendications ci-dessus, comprenant en outre la tunnelisation des paquets de données depuis un second point de réseau sur le réseau public en utilisant un conduit commuté par étiquette et, au niveau de la connexion avec le réseau public, de supprimer une étiquette attachée aux paquets de données reçus depuis le second point de destination et d'extraire l'adresse de destination IP finale de celle-ci, et de générer un jeu d'étiquettes frais afin de permettre d'envoyer les données au terminateur de réseau (18) via un autre conduit commuté par étiquette.

11. Réseau d'accès pour la remise de services IP depuis des fournisseurs de services de télécommunication en routant des paquets de données depuis un terminal client (12) vers une destination à travers un réseau d'accès privé, le réseau d'accès comprenant un terminateur de réseau (18), un moyen de connexion au réseau public ayant une adresse IP et une pluralité d'éléments de réseau ayant chacun une adresse de réseau privé, et un moyen de tunnelisation pour tunneliser les paquets de données à travers le réseau d'accès privé via le terminateur de réseau vers le moyen de connexion au réseau public,
**caractérisé en ce que**
(a) le moyen de tunnelisation comprend un moyen pour attacher au moins une étiquette aux paquets de données sur la base de l'adresse IP de la connexion au réseau public, l'étiquette incluant une information de routage à travers le réseau d'accès privé, et le moyen de tunnelisation étant opérationnel afin de router les paquets de données via un conduit commuté par étiquette sur la base de l'information de routage d'au moins une étiquette ;
(b) le moyen de connexion au réseau public inclut un serveur DHCP (26), ledit serveur étant opérationnel afin d'envoyer un message de découverte DHCP depuis le terminateur de réseau (18) via le conduit commuté par étiquette vers la connexion avec le réseau public, d'acheminer le message de découverte DHCP vers le serveur DHCP (26) et d'allouer une adresse IP publique au client au niveau du serveur DHCP (26),
(c) des moyens de mise en correspondance sont prévus pour mettre en correspondance les adresses IP publiques allouées au client avec au moins une étiquette au niveau de la connexion avec le réseau public opérationnel afin d'envoyer un message depuis le serveur DHCP (26) incluant l'adresse IP client via le conduit commuté par étiquette vers le terminateur de réseau (18), et
(d) des moyens d'insertion sont prévus pour insérer le numéro de port sur lequel le message de découverte DHCP est reçu à chaque étape du conduit commuté par étiquette dans un champ réservé à l'intérieur du message, et générer des étiquettes de routage pour router le message depuis le serveur DHCP (26) vers le terminateur de réseau à partir des numéros de port dans le champ réservé.
